# EUROPEAN PATENT APPLICATION

(11) **EP 4 759 502 A1**
(43) Date of publication of application: **17.06.2026**
(21) Application number: 24851383.0
(22) Date of filing: 11.06.2024
(51) Int. Cl.: B29C 33/32, B23Q 3/154

(54) **MAGNETIC CLAMP DEVICE**

(30) Priority: 10.08.2023 JP 2023130643
(71) Applicant: Kosmek Ltd., Kobe-shi, Hyogo 651-2241 (JP)
(72) Inventor: KOJIMA, Ryota, Kobe City, Hyogo 651-2241 (JP)
(74) Representative: Kramer Barske Schmidtchen Patentanwälte PartG mbB
(86) International application number: PCT/JP2024/021117
(87) International publication number: WO 2025/032950

(57) **Abstract**

Provided is a magnetic clamp device capable of easily releasing an object even when the object itself remains magnetized due to residual magnetism in an open state. A magnetic pad (3) disposed in a housing hole (2a) of a plate body (2) includes: a magnetic core (4) having a pad surface (PS); a reversible magnet (8) having a reversible magnetic polarity; and a non-reversible magnet (7) having that is disposed between the magnetic core (4) and a side wall (2b) of the housing hole (2a) so as to surround the magnetic core (4). The magnetic core (4) is provided with a main core (5) having a space (5a) formed therein and opening toward the reversible magnet (8) side, with a rear side of a ceiling surface (5s) of the space (5a) forming the pad surface (PS), and a movable core (6) movably accommodated in the space (5a). In a clamping state of the magnetic clamp device (1), a top surface (6d) of the movable core (6) abuts the ceiling surface (5d), and in an open state, a gap (GP) is produced between the top surface (6d) and the ceiling surface (5d).

## Description

### [TECHNICAL FIELD]

The present invention relates to a magnetic clamp device.

### [BACKGROUND ART]

A magnetic clamp device for an injection molding machine, which utilizes magnetic holding force, is known as a fixing device for a clamping target object such as a mold. The magnetic clamp device is configured to magnetically fix a mold to a plate body made of a magnetic material, the plate body being mounted on a platen of the injection molding machine. The plate body is provided with a plurality of magnetic pads. Each magnetic pad includes a non-reversible magnet (e.g., a neodymium magnet) having a fixed magnetic polarity and disposed around a magnetic pole, and a reversible magnet (e.g., an Alnico magnet) having a switchable magnetic polarity and disposed on the rear side of the magnetic pole. By controlling the magnetic polarity of the Alnico magnet using a coil, the magnetic flux of the non-reversible magnet can be switched between an open state, in which the flux passes through the reversible magnet, and a clamped state, in which the flux passes through the mold.

For example, according to Patent Document 1, a magnet unit for a magnetic clamp device includes: a magnetic body having a pair of flat surfaces, one of which serves as an adsorption surface for attracting a clamping target object; an R-T-B system permanent magnet (e.g., a neodymium magnet) arranged around the side surface of the magnetic body; an Fe-Cr-Co system permanent magnet disposed opposite the other flat surface of the magnetic body; and a coil arranged around the side surface of the Fe-Cr-Co system permanent magnet.

By using an Fe-Cr-Co system permanent magnet, which allows easier adjustment of magnetic flux, in place of an Alnico magnet, the magnetic flux of the R-T-B system permanent magnet and the Fe-Cr-Co system permanent magnet can be precisely matched, thereby facilitating the removal of the clamping target object during unclamping.

Further, according to Patent Document 2, a magnet unit having a structure in which a coil is wound around a hard magnetic material is installed on the mold mounting surface of the platen. By energizing the coil, the hard magnetic material is magnetized to become a permanent magnet, thereby attracting the mold. Conversely, by energizing the coil to demagnetize the hard magnetic material and eliminate its magnetic force, the mold can be removed from the platen. During demagnetization, a plurality of pulse currents are applied to the coil, wherein the polarity alternates and the amplitude gradually decreases.

### [RELATED ART DOCUMENTS]

### [PATENT DOCUMENT]

Patent Document 1: Japanese Unexamined Patent Application Publication No. 2021-153179
Patent Document 2: Japanese Unexamined Patent Application Publication No. 1997-174559

### [DISCLOSURE OF THE INVENTION]

### [PROBLEMS TO BE SOLVED BY THE INVENTION]

Since the clamping target object is made of a magnetic material, it possesses a certain level of coercivity. In the clamped state, magnetic flux from the non-reversible magnet passes through the clamping target object. As a result, even after transitioning from the clamped state to the released state, the clamping target object remains magnetized due to residual magnetism. Therefore, in order to remove the clamping target object from the magnetic clamp device, a pulling force sufficient to overcome the residual magnetism is required.

In the technique disclosed in Patent Document 1, no consideration is given to the residual magnetism remaining in the clamping target object. In contrast, the technique disclosed in Patent Document 2 enables demagnetization of not only the hard magnetic material but also the mold itself by demagnetizing the hard magnetic material. However, this approach cannot be applied to magnetic clamp devices that utilize non-reversible magnets.

An object of the present invention is to provide a magnetic clamp device capable of easily separating a clamping target object, even when the object remains magnetized due to residual magnetism in the released state.

### [MEANS TO SOLVE THE PROBLEM]

The present invention provides a magnetic clamp device comprising a plate body made of a magnetic material and having a plurality of magnetic pads arranged in housing holes formed on a surface thereof, wherein each of the magnetic pads includes a magnetic core having, on its front side, a pad surface for contacting a magnetic clamping target object to be fixed, a reversible magnet having a switchable magnetic polarity and disposed on a rear side of the magnetic core, and a non-reversible magnet having a fixed magnetic polarity and disposed so as to surround the magnetic core between the magnetic core and a side wall of the housing hole, the magnetic core comprising a main core having a space formed therein and opening toward the reversible magnet side, with a rear side of a ceiling surface of the space serving as the pad surface, and a movable core movably disposed within the space, wherein, in a clamped state in which magnetic flux from the non-reversible magnet passes through the clamping target object, a top surface of the movable core abuts the ceiling surface, and in a released state in which the magnetic flux from the non-reversible magnet passes through the reversible magnet, a gap is formed between the top surface of the movable core and the ceiling surface.

### [FFECT OF THE INVENTION]

According to the present invention, by dividing the magnetic core into a movable core and a main core, it is possible to reduce residual adsorption force in a released state in which magnetic flux from the non-reversible magnet passes through the reversible magnet, by forming a gap between a top surface of the movable core and a ceiling surface of the main core.

### [BRIEF DESCRIPTION OF THE DRAWINGS]

[Figure 1] FIG. 1 is a diagram illustrating the magnetic core, wherein FIG. 1A is an enlarged cross-sectional view of a magnetic pad of the magnetic clamp device, and FIG. 1B is an exploded perspective view of the magnetic core of the magnetic pad.
[Figure 2] FIG. 2 is a diagram illustrating the movement of the movable core within the main core.
[Figure 3] FIG. 3 is a diagram illustrating the evaluation environment, wherein FIG. 3A shows the evaluation instrument, and FIG. 3B is a diagram illustrating the area of the magnetic pad to be evaluated.
[Figure 4] FIG. 4 is a diagram illustrating the experimental results.

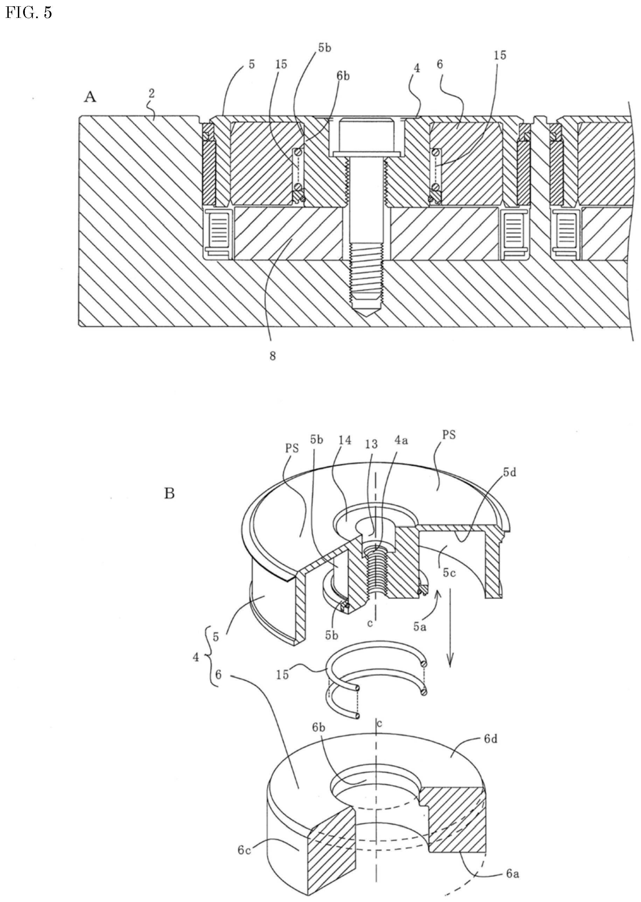

[Figure 5] FIG. 5 is a diagram illustrating another embodiment.
[Figure 6] FIG. 6 is a diagram illustrating another embodiment.

### [PREFERRED EMBODIMENT OF THE INVENTION]

Hereinafter, embodiments of the present invention will be described.

### (EMBODIMENT 1)

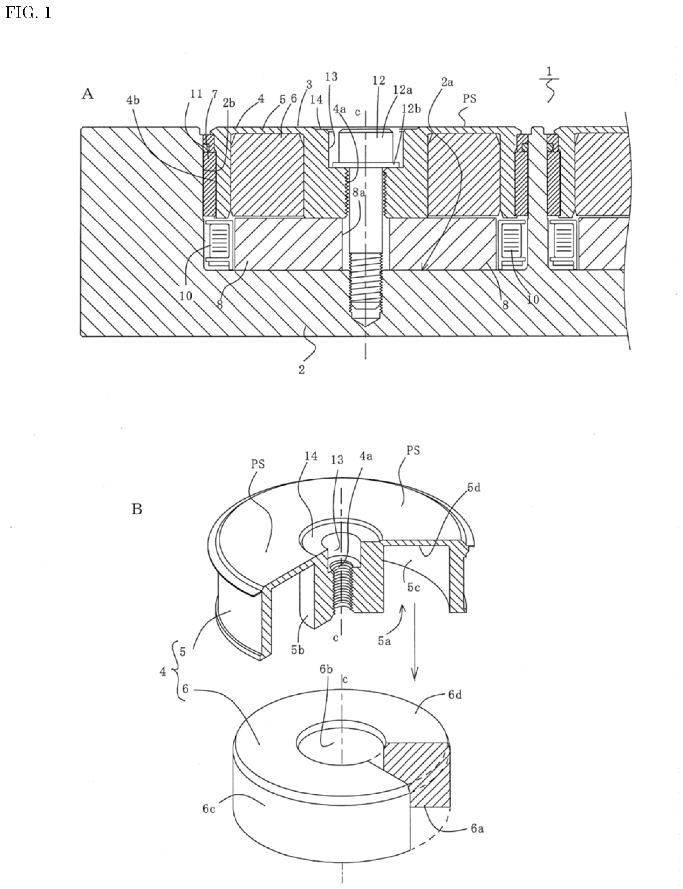

FIG. 1A is an enlarged cross-sectional view of a magnetic pad 3 of the magnetic clamp device, and FIG. 1B is an exploded perspective view of a magnetic core 4 of the magnetic pad 3.

As shown in FIG. 1A, a magnetic clamp device 1 includes a plate body 2 made of a magnetic material, in which a housing hole 2a is formed on a surface side of the plate body 2, and a magnetic pad 3 is disposed within the housing hole 2a. The front surface of the magnetic pad 3 (pad surface PS) serves as an adsorption surface that comes into contact with a clamping target object and magnetically attracts it. The magnetic pad 3 includes: a magnetic core 4; a non-reversible magnet 7 (e.g., a neodymium magnet) having a fixed magnetic polarity, which is provided around the magnetic core 4 so as to surround it and is disposed between the magnetic core 4 and a side wall 2b of the housing hole 2a; a reversible magnet 8 (e.g., an Alnico magnet) having a magnetic polarity that can be reversed, which is disposed on the rear side of the magnetic core 4; a bobbin 9 arranged around the reversible magnet 8; and a coil 10 wound around the bobbin 9. The rear side of the reversible magnet 8 is in contact with the plate body 2. The surface of the magnetic core 4 serves as the pad surface PS of the magnetic pad 3.

The magnetic core 4 and the reversible magnet 8 respectively have through-holes 4a and 8a formed along a central axis c, the through-holes 4a and 8a being in communication with each other, wherein a counterbore 13 for accommodating a head portion 12a of a bolt 12 is formed at an entrance of the through-hole 4a, and the bolt 12 fixes the magnetic core 4 and the reversible magnet 8 to the plate body 2 via a sealing member 12b (seal washer).

The magnetic core 4 is in contact with the non-reversible magnet 7 along its outer peripheral portion 4b. A sealing member 11 (O-ring) is provided above the non-reversible magnet 7 to enhance watertightness.

An adjustment recess 14 is a recess centered on the central axis c of the magnetic core 4, and has a shape similar to the outer peripheral shape of the magnetic core 4 or to the circular inner periphery of the non-reversible magnet 7. The adjustment recess 14 is provided around the counterbore 13 and is located at the center of the pad surface PS. The adjustment recess 14 is not provided on the outer peripheral side of the magnetic core 4 because providing it there would leave only a long magnetic path from the non-reversible magnet 7 to the mold.

The magnetic core 4 comprises a main core 5 and a movable core 6. The main core 5 and the movable core 6 are each integrally formed from a ferromagnetic material such as steel. As illustrated in FIG. 1B, the main core 5 is provided with a space 5a that opens toward the surface on the side of the reversible magnet 8. A rear side of a ceiling surface 5d of the space 5a serves as a pad surface PS. In the present embodiment, the space 5a has a doughnut shape concentric with the central axis c. A first inner peripheral surface 5b and a second inner peripheral surface 5c extend parallel to the central axis c, and the ceiling surface 5d is a surface perpendicular to the central axis c.

The movable core 6 has a shape that substantially fills the space 5a and is slidable within the space 5a in the direction of the central axis c. In the present embodiment, the movable core 6 has a doughnut shape that is concentric with the central axis c. A first outer peripheral surface 6b and a second outer peripheral surface 6c are parallel to the central axis c, and a top surface 6d and a bottom surface 6a are surfaces perpendicular to the central axis c. The bottom surface 6a is approximately equal to the opening of the space 5a facing the reversible magnet 8. Meanwhile, the length t of the first outer peripheral surface 6b and the second outer peripheral surface 6c in the direction of the central axis c is shorter than the length d of the first inner peripheral surface 5b and the second inner peripheral surface 5c in the direction of the central axis c by a difference st (i.e., st = d - t). Accordingly, the movable core 6 is movable within the space 5a by the difference st in the direction of the central axis c.

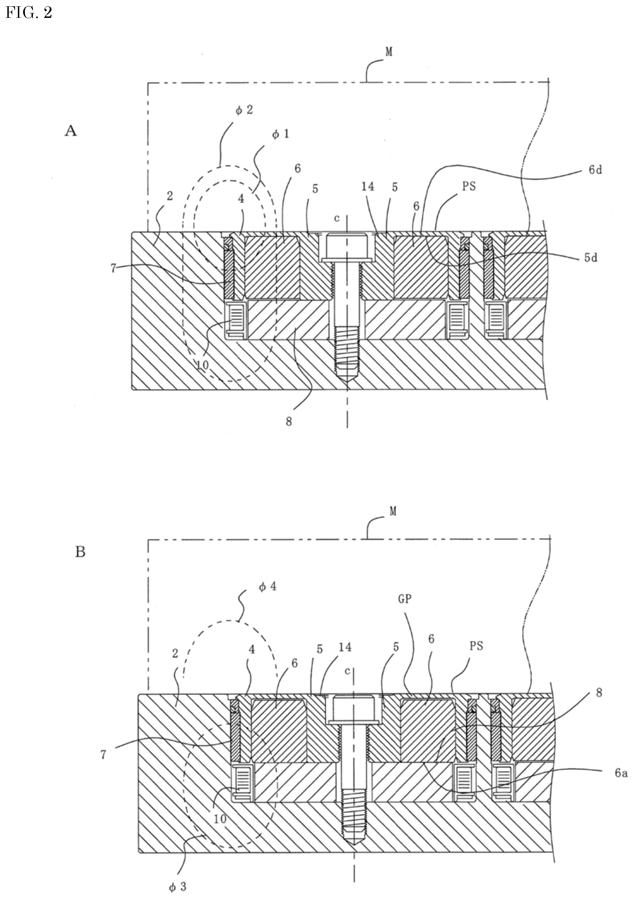

FIG. 2 illustrates the movement of the movable core 6 within the main core 5. In FIG. 2A, the magnetic clamp device 1 is shown in a clamping state, and FIG. 2B shows the device in a release state. In FIG. 2A, the magnetic clamp device 1 forms a magnetic flux loop φ1 that passes through the non-reversible magnet 7, the magnetic core 4, the mold M (indicated by a two-dot chain line), and the plate body 2, and returns to the non-reversible magnet 7. Another magnetic flux loop φ2 is formed, passing through the reversible magnet 8, the magnetic core 4, the mold M, and the plate body 2, and returning to the reversible magnet 8. In order to facilitate the passage of magnetic flux through the loop φ1, the movable core 6 of the magnetic core 4 is moved upward in the direction of the central axis c by the magnetic force of the non-reversible magnet 7, such that the top surface 6d of the movable core 6 comes into contact with the ceiling surface 5d of the space 5a.

In both loops, the magnetic flux is concentrated along the outer peripheral region of the magnetic core 4, and only a small amount of magnetic flux passes through the central portion of the magnetic core 4. This is because magnetic flux tends to follow shorter paths, and the central portion of the magnetic core 4 lies along a longer path from the non-reversible magnet 7 to the mold, resulting in less magnetic flux passing through it. This is also partly due to the presence of the adjustment recess 14 provided at the center of the magnetic core 4. As a result, magnetic poles of residual flux caused by the holding force of the mold appear in regions where a large amount of magnetic flux has passed.

In contrast, in FIG. 2B, the magnetic clamp device 1 forms a magnetic flux loop φ3 in which the magnetic flux of the non-reversible magnet 7 passes through the magnetic core 4, the reversible magnet 8, and the plate body 2, and returns to the non-reversible magnet 7. The movable core 6 of the magnetic core 4 is moved downward in the direction of the central axis c by the magnetic forces of both the non-reversible magnet 7 and the reversible magnet 8, such that the bottom surface 6a of the movable core 6 comes into contact with the reversible magnet 8, thereby forming the loop φ3 in a manner that facilitates the passage of magnetic flux from the non-reversible magnet 7. As a result, a gap GP corresponding to the difference st is formed between the top surface 6d of the movable core 6 and the ceiling surface 5d of the space 5a.

In FIG. 2B, the path of residual magnetic flux remaining due to the holding force of the mold M is indicated as loop φ4. Since a gap GP is present downstream of this path so as to interrupt the loop φ4, the attractive force of the magnetic clamp device 1 on the mold M is reduced.

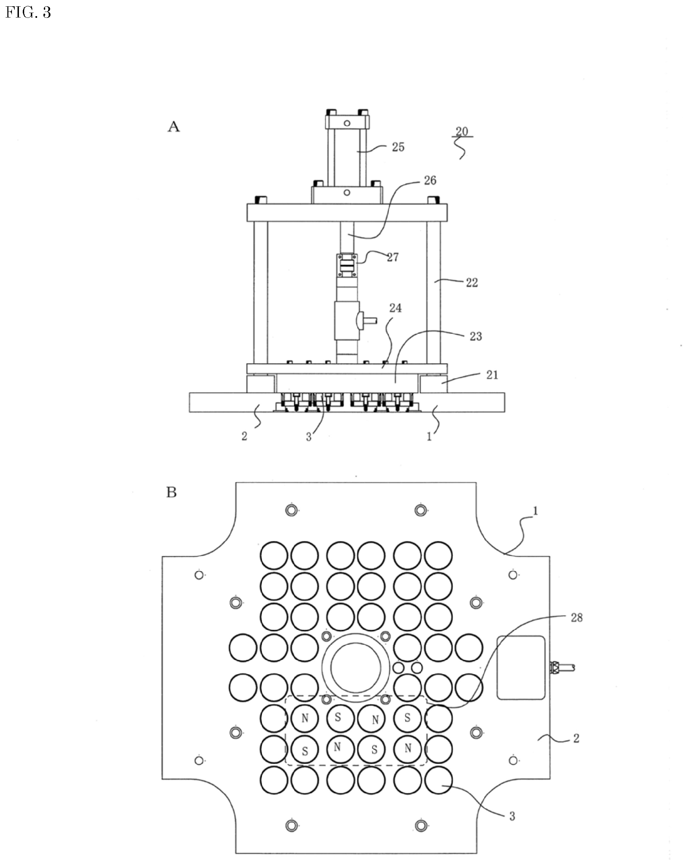

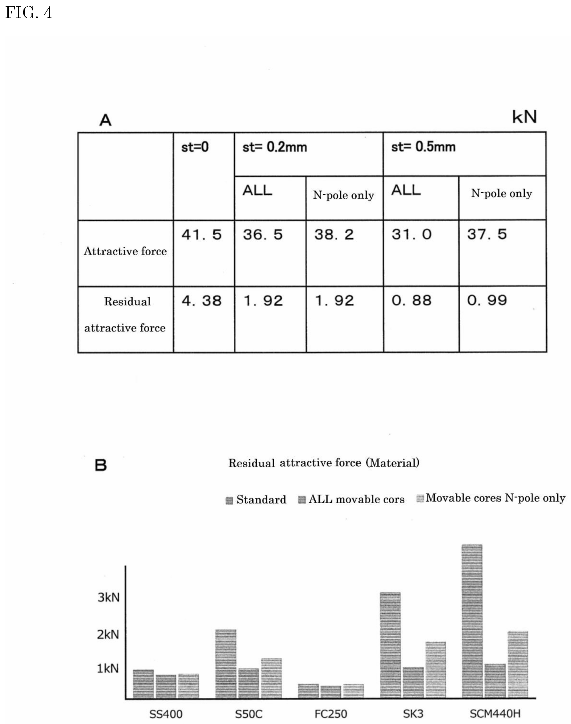

FIGS. 3 and 4 illustrate an evaluation of the size of the gap GP (difference st). FIG. 3 illustrates the evaluation environment, where FIG. 3A shows the evaluation instrument 20, and FIG. 3B illustrates the area of the magnetic pad 3 to be evaluated. The evaluation results are shown in FIG. 4.

In FIG. 3A, the evaluation instrument 20 includes: a leg portion 21 mounted on the magnetic clamp device 1; a movable portion 24 that moves vertically along the path of a guide rod 22 and to which a dummy mold 23 is attached; a drive unit 25 that lifts the movable portion 24; and a load sensor 27 that measures a tensile force between an output shaft 26 of the drive unit 25 and the movable portion 24. The evaluation instrument 20 is mounted on the magnetic clamp device 1, and the dummy mold 23 is attracted by the magnetic pad 3. In FIG. 3B, the dummy mold 23 has a size indicated by the dotted line 28. A plurality of magnetic pads 3 are arranged on the plate body 2 such that the magnetic polarities of adjacent magnetic pads 3 are different from each other. In this example, a number of magnetic pads 3 having N polarity and magnetic pads 3 having S polarity are alternately arranged. Among them, the dummy mold 23 is attracted to a total of four bipolar poles, consisting of four N-pole magnetic pads 3 and four S-pole magnetic pads 3. The movable portion 24 is then lifted by the drive unit 25, and the tensile force generated when the dummy mold 23 is detached from the magnetic pads 3 is measured by the load sensor 27. The dummy mold 23 is made of SCM440H (chromium molybdenum steel).

In FIG. 4A, the tensile force was measured while varying the magnitude of the stroke difference st. In the measurement, magnetic cores 4 having difference st values of 0 mm (corresponding to a conventional structure in which the magnetic core 4 is not divided into a movable core 6 and a main core 5), 0.2 mm, and 0.5 mm were prepared. In addition, a test was conducted using a configuration in which the magnetic cores 4 of all four N-pole magnetic pads 3 and all four S-pole magnetic pads 3 were divided into a movable core 6 and a main core 5 (indicated as "ALL" in the figure). Further, a test was also conducted using a configuration in which only the magnetic cores 4 of the four N-pole magnetic pads 3 were divided into a movable core 6 and a main core 5, while the magnetic cores 4 of the four S-pole magnetic pads 3 remained integral (indicated as "N-pole only" in the figure). It is noted that the case in which only the magnetic cores 4 of the four S-pole magnetic pads 3 are divided into a movable core 6 and a main core 5 is identical to the "N-pole only" case and is therefore omitted. The other configurations of the magnetic pads 3 are common.

When only the magnetic core 4 of the magnetic pads 3 having one magnetic pole were divided into a movable core 6 and a main core 5, and when the magnetic cores 4 of the magnetic pads 3 having both magnetic poles were divided into the same manner, the holding force did not decrease significantly in either case. In both cases, however, an increasing trend of significant reduction in holding force was observed as the difference st increased. As a result, it was found that, in order to reduce the residual holding force, it is sufficient to divide the magnetic cores 4 of only the magnetic pads 3 having one magnetic pole into a movable core 6 and a main core 5.

In addition, the holding force also varies depending on the material of the mold. The residual holding force was measured for dummy molds 23 made of different materials. The dummy molds used for the measurement were made of SS400 (general structural rolled steel), S50C (carbon steel for machine structural use), FC250 (gray cast iron), and SK3 (carbon tool steel). In FIG. 4B, the measurement results for five types of materials are shown, including the previously measured mold material SCM440H. Although little difference was observed in mold materials with inherently low residual magnetic flux, the residual holding force was reduced in both the case where only the N-pole magnetic pads were used and the case where both magnetic poles were used.

### (EMBODIMENT 2)

In Embodiment 2, a gap is provided between the center side of the movable core 6, that is, the second outer peripheral surface 6c, and the second inner peripheral surface 5c of the main core 5, and a spring 15 is disposed in this gap. In Embodiment 1, the movable core 6 had a shape that substantially filled the space 5a, and was smaller than the space 5a by a difference st (= d - t). In the present embodiment, the movable core 6 is also shorter than the space 5a in the direction of the central axis c by the difference st, as in the previous embodiment. However, the movable core 6 is further reduced in size at its central portion. As described above, since the magnetic flux passing through the center of the magnetic core 4 is relatively small, the space between the second outer peripheral surface 6c of the movable core 6 and the second inner peripheral surface 5c of the main core 5 was selected as the location for arranging the spring 15. The spring 15 is a compression spring, with its lower end fixed to the main core 5 and its upper end fixed to the movable core 6. The spring 15 acts to urge the movable core 6 toward the ceiling surface 5d of the main core 5. In the open state, in which the magnetic flux of the non-reversible magnet 7 passes through the reversible magnet 8, the movable core 6 is attracted toward the reversible magnet 8 by the magnetic forces of the non-reversible magnet 7 and the reversible magnet 8. The spring 15 is used to assist in separating the movable core 6 from the reversible magnet 8. Alternatively, instead of using a compression spring, a tension spring may be employed to urge the movable core 6 toward the reversible magnet 8. In this case, when the residual magnetic flux remaining in the mold is stronger than expected, the spring 15 can be used to assist in returning the movable core 6 toward the reversible magnet 8.

### (EMBODIMENT 3)

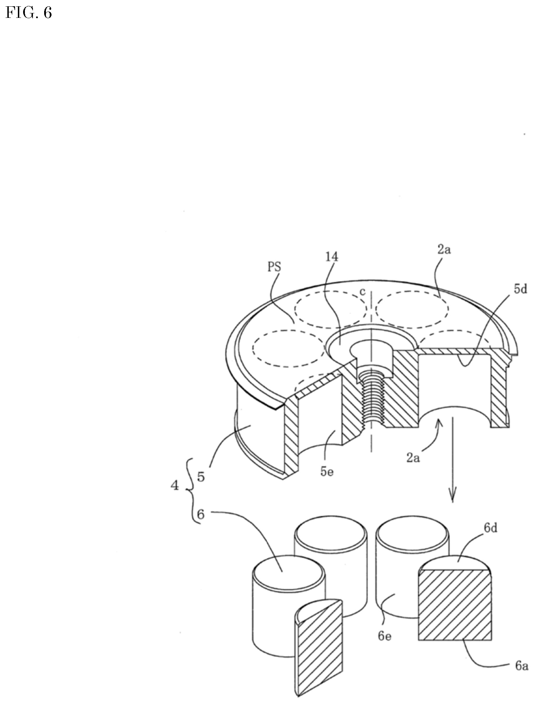

In Embodiment 1, the movable core 6 had a doughnut shape; however, other shapes may also be employed. For example, as shown in FIG. 6, a cylindrical shape may be used. In FIG. 6, only the magnetic core 4 is illustrated, and other components are omitted as they are identical to those in the previous embodiments. A cylindrical space 5a is also provided on the main core 5 side. The movable core 6 is shorter in the direction of the central axis *c* by the difference *st*, as in the previous embodiment, and the outer peripheral surface 6e of the movable core 6 slidably contacts the inner peripheral surface 5e of the main core 5. In the open state, in which the magnetic flux of the non-reversible magnet 7 passes through the reversible magnet 8, the lower surface 6a of the movable core 6 comes into contact with the reversible magnet 8. In the clamped state, in which the magnetic flux of the non-reversible magnet 7 passes through the mold M, the top surface 6d of the movable core 6 comes into contact with the ceiling surface 5d of the space 5a.

### DESCRIPTION OF REFERENCE NUMERAL

- 1: magnetic clamp device
- 2: plate body
- 2a: housing hole
- 2b: side wall
- 3: magnetic pad
- 4: magnetic core
- 4a, 8a: through-hole
- 4b: outer peripheral portion
- 5: main core
- 5a: space
- 5b: first inner peripheral surface
- 5c: second inner peripheral surface
- 5d: ceiling surface
- 5e: inner peripheral surface
- 6: movable core
- 6a: bottom surface
- 6b: first outer peripheral surface
- 6c: second outer peripheral surface
- 6d: top surface
- 6e: outer peripheral surface
- 7: non-reversible magnet
- 8: reversible magnet
- 9: bobbin
- 10: coil
- 11: sealant
- 12: bolt
- 12a: head portion
- 12b: sealant
- 13: counterbore
- 14: adjustment recess
- 15: spring
- 20: evaluation instrument
- 21: leg portion
- 22: guide rod
- 23: dummy mold
- 24: movable portion
- 25: drive unit
- 26: output shaft
- 27: load sensor
- 28: dotted line

## Claims

1. A magnetic clamp device comprising a plate body made of a magnetic material, and having a plurality of magnetic pads disposed in housing holes formed in a surface thereof,
wherein each of the magnetic pads comprises:
a magnetic core having, on a front side thereof, a pad surface configured to contact a magnetic object to be fixed;
a reversible magnet disposed on a rear side of the magnetic core and having a magnetic polarity; and
a non-reversible magnet having a fixed magnetic polarity and disposed so as to surround the magnetic core between the magnetic core and a side wall of the housing hole,
wherein the magnetic core comprises:
a main core having a space formed therein and opening toward the reversible magnet side, a rear side of a ceiling surface of the space forming the pad surface; and
a movable core movably accommodated in the space,
wherein, in a clamping state in which magnetic flux from the non-reversible magnet passes through the object, a top surface of the movable core abuts the ceiling surface, and in a release state in which the magnetic flux from the non-reversible magnet passes through the reversible magnet, a gap is formed between the top surface of the movable core and the ceiling surface.

2. The magnetic clamp device according to claim 1, wherein a spring is provided to urge the movable core toward the non-reversible magnet within the space.

3. The magnetic clamp device according to claim 1 or 2, wherein the pad surface is provided with an adjustment recess at a central position thereof, the alignment recess having a shape similar to an outer peripheral shape of the magnetic core or an inner peripheral shape of the non-reversible magnet.

4. The magnetic clamp device according to claim 1, wherein the magnetic polarities of the plurality of magnetic pads arranged on the plate body are configured such that adjacent magnetic pads have different magnetic polarities, and wherein the magnetic core of the magnetic pad of at least one of the magnetic poles having a magnetic pole is divided into the movable core and the main core.
